# EUROPEAN PATENT SPECIFICATION

(11) **EP 1 875 582 B1**
(45) Date of publication and mention of the grant of the patent: **22.02.2017**
(21) Application number: 06748448.5
(22) Date of filing: 16.03.2006
(51) Int. Cl.: H02J 7/00, H01M 10/48, H01M 10/613, H01M 10/617, H01M 10/625, H01M 10/643, H01M 10/6563, H01M 10/6566, H01M 2/10, H01M 2/20

(54) **POWER SUPPLY SYSTEM COMPRISING TEMPERATURE SENSOR STATIONS**
STROMVERSORGUNGSSYSTEM MIT TEMPERATURSENSORSTATIONEN
SYSTEME D'ALIMENTATION ELECTRIQUE COMPRENANT DES STATIONS DE CAPTEUR DE TEMPERATURE

(30) Priority: 16.03.2005 US 662418 P
(43) Date of publication of application: 09.01.2008
(73) Proprietor: Ford Global Technologies, LLC, Dearborn, MI 48126 (US)
(72) Inventor: MAGUIRE, Patrick, Ann Arbor, Michigan 48103 (US); ZHU, Douglas, Chandler, AZ 85226 (US); PATEL, Dharmendra, Canton, Michigan 48188 (US); GONZALES, Philip, Dearborn, Michigan 48124 (US); PARAMASIVAM, Saravanan, South Lyon, Michigan 48178 (US)
(74) Representative: Messulam, Alec Moses
(86) International application number: PCT/US2006/009891
(87) International publication number: WO 2006/099602

(56) References cited:
- EP-A2- 1 069 629
- JP-A- 2005 189 080
- US-A1- 2005 074 655
- US-B1- 6 225 788
- US-B1- 6 296 966
- US-B1- 6 498 406

## Description

### 1. Field of the Invention

The present invention relates to a power supply system, and more particularly, a power supply system that can be used, for example, in conjunction with a hybrid electric vehicle.

### 2. Background Art

Cylindrical battery cells, which are used in a variety of applications, have standardized sizes, are relatively inexpensive, and are commonly available. All of these qualities make them good candidates for mass production high voltage batteries. Their cylindrical shape does, however, create a number of challenges when they are combined in large quantities to create a high voltage battery. For example, the individual battery cells need to be electrically connected to each other, which can create a large number of electrical connections adding cost and weight to the battery assembly. Moreover, the individual battery cells are usually grouped together in various arrangements that are heavy and unwieldy, and may require lift assist devices to move them.

One way to avoid using a large number of connecting bars between adjacent battery cells, is to place the batteries in long rows in an end-to-end configuration. One problem with this approach is that each individual battery cell has a length that is subject to a manufacturing tolerance. The greater the number of cells placed in a single row, the greater the possible variation in the overall length of the row. This problem, caused by tolerance stack up, can lead to misalignment of the terminals of the batteries at the ends of the rows.

In addition to variations in the length of the battery cells, the tolerance stack up problem can be exacerbated by differences in the sizes of any interconnecting components. Thus, it may be difficult to connect two adjacent rows of batteries to each other if one of the rows is significantly longer than the other. Moreover, it is desirable to have uniform contact between a battery terminal and a connector to ensure an electrical connection with sufficiently low resistance. Such uniform contact can be difficult or impossible to achieve with unaligned terminals.

Conventional battery cell arrangements also have other disadvantages. For example, service personnel may be exposed to high voltage when attempting to access one or more of the individual battery cells. This may be particularly problematic because of the large number of exposed battery connections required to electrically connect the individual cells together. In addition, it is desirable to cool each of the battery cells in such a way as to minimize temperature difference between the cells. This is very difficult in conventional battery arrangements, where some of the cells typically receive greater cooling than other cells depending on their proximity to the cooling source. Some battery arrangements even require a secondary structure, such as a battery compartment wall, to form a portion of a plenum or other duct used in the cooling process. This means that any change to the battery structure, or moving the battery assembly to another location, necessarily changes the cooling mechanism. This lack of flexibility is undesirable in many applications, and in particular, in hybrid electric vehicles (HEV's), where flexibility of design is important.

In addition to the configuration of the battery assembly itself, or its location, other factors can affect uniform cooling of the battery cells. For example, it may be desirable to have a number of different temperature sensors in different locations in a large battery cell arrangement. More desirable still would be to have such temperature sensors directly in contact with one or more battery cells, such that temperatures of the cells could be measured directly.

In conventional battery arrangements, temperature sensors are often placed on a battery housing, such that the temperature of the battery cells is not measured directly. Rather, the temperature of the battery housing is measured, and some correction factor must be used to estimate the temperature of the nearby battery cells. If, however, a temperature sensor is placed in contact with a battery cell, or in very close proximity to the battery cell, the sensor can interrupt the airflow around the battery cells, causing non-uniform airflow and undesirable differences in the temperatures of the battery cells , for example, Us6498406 B1 and US6225788 B1 disclose such battery power systems.

Therefore, it would be desirable to have a power supply system able to overcome some or all of the shortcomings of conventional power supply systems, such as those discussed above.

### Summary of the invention

According to the present invention, there is provided a power supply system as hereinafter set forth in Claim 1 of the appended claims.

### Brief description of the drawings

The invention will now be described further, by way of example, with reference to the accompanying drawings, in which:
Figure 1 shows a perspective view of a power supply system including a battery brick;
-Figure 2 shows a plurality of the battery bricks positioned adjacent to each other;
Figure 3 shows a manifold used to distribute air through a number of the battery bricks positioned adjacent to each other;
Figure 4 shows an interior surface of a battery brick, including a number of projections configured to increase turbulence in cooling airflow;
Figure 5 shows an alternative embodiment of a power supply system including a battery brick;
Figure 6 shows a side view of a battery brick and one method of mounting the brick to a plate structure;
Figures 7A and 7B show a mounting configuration for a battery brick onto a portion of a battery compartment structure;
Figure 8 shows a second alternative embodiment of a power supply system including a battery brick;
Figure 9 shows a plurality of the battery bricks shown in Figure 8 attached to each other using tie-rods and end plates;
Figure 10 shows a portion of a battery brick including a channel for receiving a tie-rod;
Figure 11 shows an exploded view of the battery brick shown in Figure 8;
Figure 11A shows a portion of a battery cell, including a negative battery terminal, and an insulator configured to be used on the negative terminal;
Figure 12 shows a cutaway of a portion of the battery brick shown in Figure 8;
Figure 13 shows a cross section of a third alternative embodiment of a battery brick housing;
Figure 14 shows a perspective view of the battery brick housing shown in Figure 13, after the housing is assembled;
Figure 15 shows the arrangement of battery bricks shown in Figure 9, having terminal connectors being attached thereto;
Figures 16 and 17 illustrate removal of the terminal connectors shown in Figure 15 to eliminate exposure to high voltage terminals;
Figure 18 shows a rear portion of the battery brick arrangement shown in Figure 15, with a single terminal connector being attached to the battery terminals on the rear portion of the bricks;
Figure 19 shows an alternative embodiment of the terminal connectors shown in Figure 15;
Figure 19A shows a battery cell terminal usable with the terminal connectors shown in Figure 19;
Figure 20 shows a cross section of the battery brick shown in Figure 8, including locating devices for locating the battery cells within the battery brick housing;
Figure 21 shows a detail of one of the locating devices shown in Figure 20;
Figure 22 shows a detail of a sensor station formed on the battery brick shown in Figure 8;
Figure 23 shows an alternative embodiment of a portion of a sensor station for a battery brick housing; and
Figure 24 shows the complete sensor station with a temperature sensor installed for the sensor station shown in Figure 23.

### Detailed description of the preferred embodiment(s)

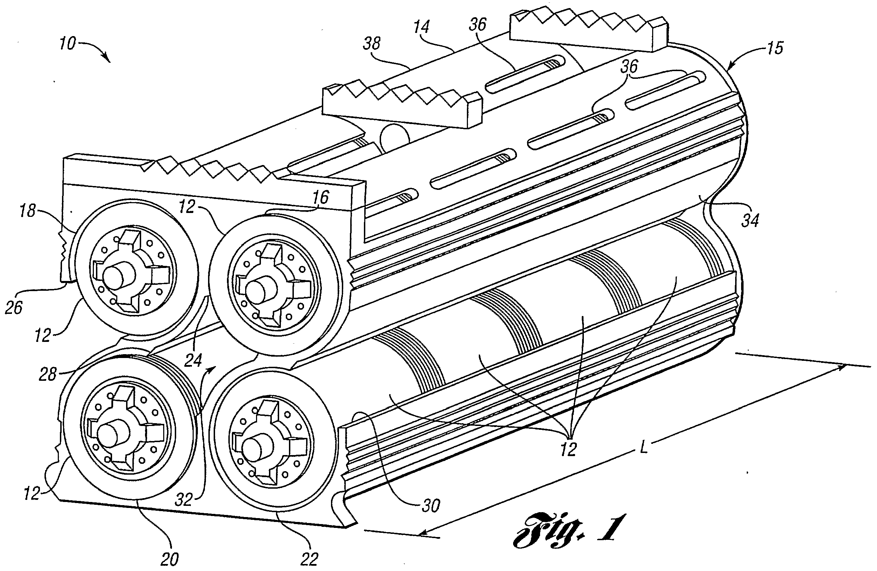

Figure 1 shows a power supply system 10. The power supply system includes a plurality of power supply units, or battery cells 12, arranged in a housing 14, thereby forming a brick 15. As shown in Figure 1, the battery cells 12 are generally cylindrical, having a generally circular cross section. The housing 14 includes four generally tubular compartments 16, 18, 20, 22 configured to receive the battery cells 12.

As shown in Figure 1, each of the compartments 16, 18, 20, 22 is arranged to receive four of the battery cells 12 configured in an end-to-end configuration. For convenience, a group of the battery cells 12 disposed in an end-to-end configuration may be conveniently referred to as a module. Although the housing 14 shown in Figure 1 is configured to receive four battery modules, for a total of 16 of the battery cells 12, it is understood that it is possible for the housings to be capable of receiving a greater number of, or fewer of, the battery cells 12 than the housing 14 shown in Figure 1. Indeed, battery modules may also contain greater than, or fewer than, four battery cells. In the case where a battery module contains only a single battery cell, each battery cell is also a battery module. It should be clear from the foregoing discussion that the terms "battery module" and "brick" are used for convenience, and do not necessarily imply a certain number of power supply units, or battery cells.

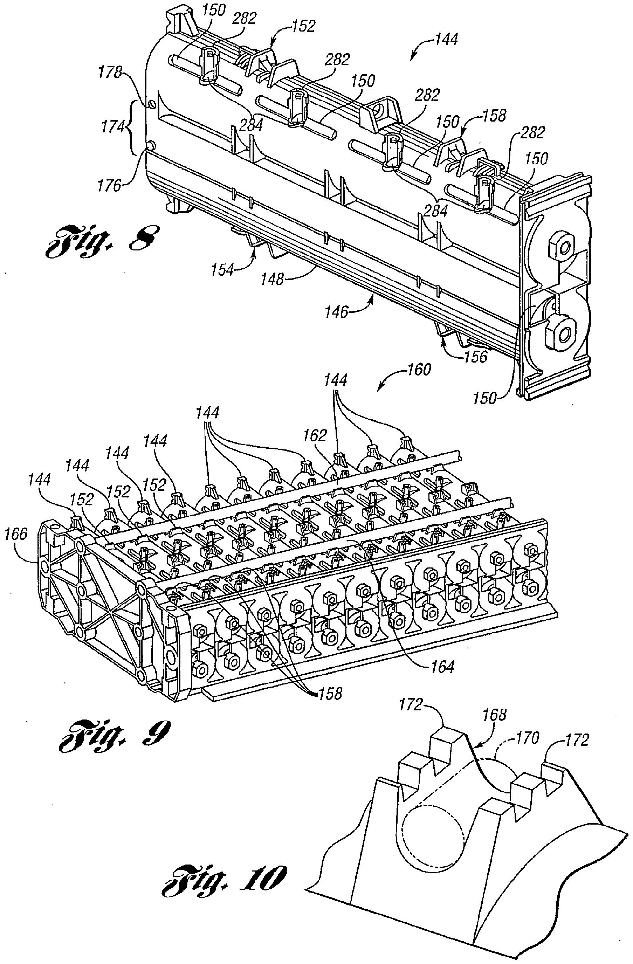

The housing 14 can be viewed in cross section as a pair of "Figure 8" containers disposed adjacent to each other. Unlike a true "Figure 8", however, the cross section of the housing 14 includes curves that are not completely closed. For example, each of the compartments includes a circumferential discontinuity, or channel 24, 26, 28, 30, which is disposed along a length (L) of the housing 14. Two of the channels 24, 28 are oriented toward an interior 32 of the housing 14, while the other two channels 26, 30 are oriented toward an exterior 34 of the housing 14.

As shown in Figure 1, the interior 32 of the housing 14 defines an airflow path, into which cooling air can enter, flow around the battery cells 12 in the compartments 16,20, and then leave the housing 14 through apertures 36 formed in a wall 38 of the housing 14. Although not visible in Figure 1, it is understood that each of the compartments 16-22 include apertures 36 to facilitate airflow. Moreover, it is possible to move air into the compartments 16-22 through the apertures 36, such that the air exits the housing 14 through the interior 32. The apertures 36 can be all the same size, or they can be specifically sized, or "tuned", to provide more or less resistance to airflow. Moreover, apertures, such as the apertures 36, need not be slots; rather, they can be any shape effective to facilitate the desired airflow --e.g., round or elliptical holes.

Utilizing the interior 32 of the housing 14 for the cooling airflow, helps to insure that the airflow will be unaffected regardless of where the brick 15 is installed. Although the channels 26, 30 are open to the exterior 34 of the housing 14, and therefore may be subjected to differing airflows depending on where the brick 15 is installed, it is contemplated that the brick 15 will be used in conjunction with other bricks so the majority of airflow will be through interior spaces.

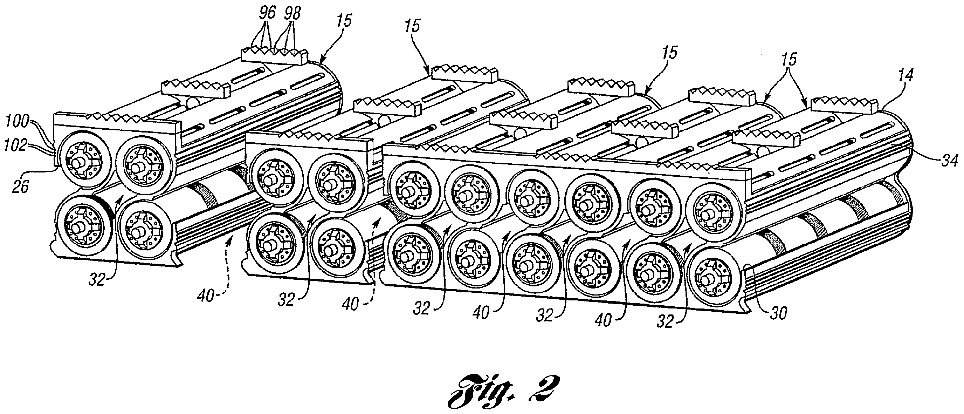

Figure 2 provides a clear example of this, in which five of the bricks 15 are disposed adjacent to each other. Each of the bricks 15 includes its own interior portion 32, and also includes a common interior portion 40 which is formed by the exterior facing channels -- such as the channels 26, 30 shown in Figure 1 -- when the bricks 15 are moved adjacent to each other. Two of the common interior spaces 40, shown in Figure 2, are shown with a dashed line, indicating that they are not yet formed, but will be formed when the bricks 15 are moved directly adjacent to each other. As explained more fully below, the power supply may include different arrangements of bricks, such as the bricks 15, to form larger power supply systems, and in particular, high voltage batteries, for use in various applications. With the arrangement of bricks 15 shown in Figure 2, only the outer most open channels 26, 30 are oriented to the exterior 34 of the brick housings 14. Thus, the majority of cooling airflow will be through the interiors 32, 40 of the bricks 15.

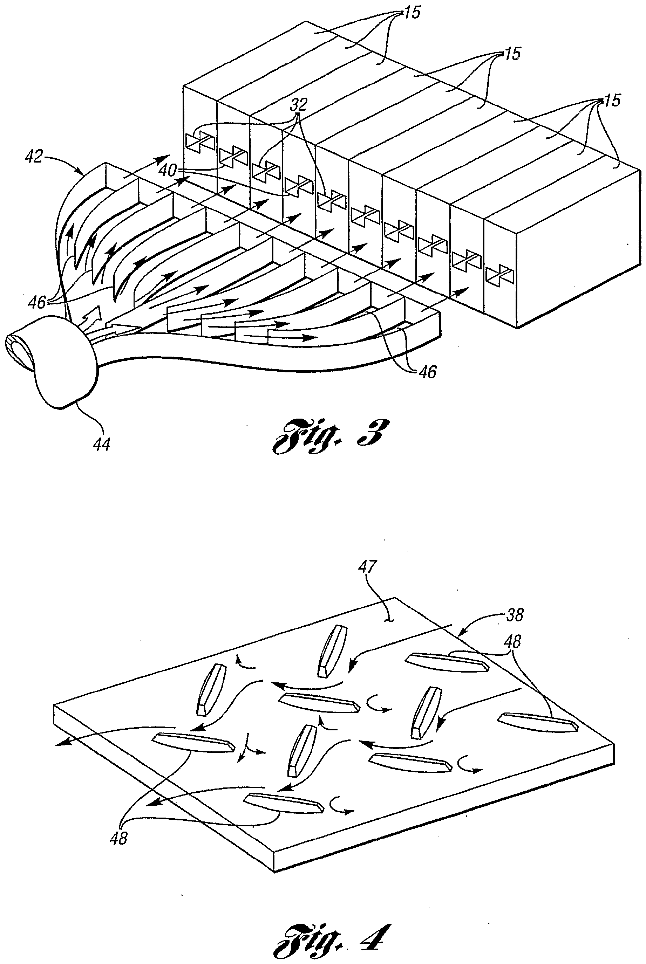

In order to facilitate proper distribution of cooling air through the bricks 15, a manifold, such as the manifold 42 shown in Figure 3, may be used. In Figure 3, an array of bricks 15 is illustrated schematically, along with interior portions 32, 40 forming air intakes for the bricks 15. The manifold 42 is configured to receive air from an airflow source, such as a duct 44. The duct 44 may be connected to a fan or other cooling system to provide air to the bricks 15 at some desired temperature. This configuration is for a "push" air flow. Alternatively a "pull" air flow, may be used, where a fan is located downstream of the brick array.

The manifold 42 includes a plurality of channels 46, each of which is associated with one or more of the bricks 15. The channels 46 can be configured to be all the same width, or they can be specifically configured to have different widths to accommodate different levels of airflow. Other structures can be used to deliver air to an array of bricks -- e.g., a manifold without channels, a plenum, or a duct.

In addition to the manifold 42, the power supply system 10 can also increase cooling efficiency by creating turbulence in the airflow surrounding the battery cells 12. Figure 4 shows a portion of an interior surface 47 of the wall 38 shown in Figure 1. Facing the battery cells 12 is a series of protrusions, or turbulators 48, which are configured to disrupt the airflow and cause turbulence therein. This increases the convective cooling of the battery cells 12. Such a wall configuration can be formed, for example, during a molding process in which the housing 14 is injection molded. Turbulators having other shapes, for example, spirals, can also be used to increase turbulence in the airflow.

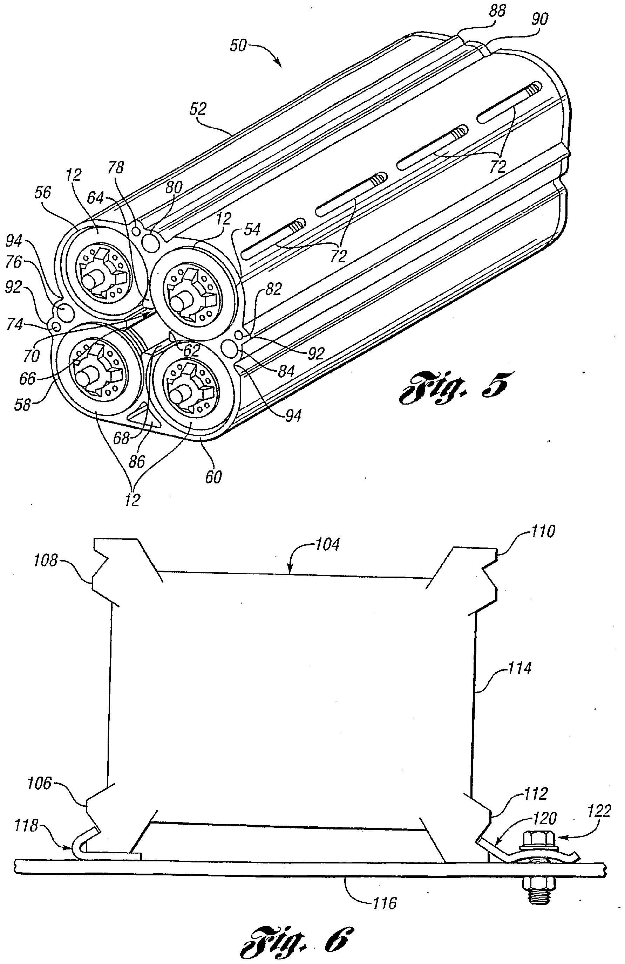

Figure 5 shows a brick 50 having a closed housing 52. Like the housing 14, shown in Figure 1, the housing 52 includes four compartments 54, 56, 58, 60, for receiving battery cells 12. Each of the compartments 54-60 includes a respective channel 62, 64, 66, 68. Unlike the channels 24-30, shown in Figure 1, however, the channels 62-68 each open to an interior 70 of the housing 52. Similar to the housing 14, the housing 52 includes apertures 72 to facilitate the movement of airflow across the battery cells 12. Although only four of the apertures 72 are visible in Figure 5, it is understood that each of the compartments 54-60 includes its own apertures 72. The housing 52 also includes a number of other cavities 74, 76, 78, 80, 82, 84, 86 configured to reduce the amount of material used in manufacturing, and to avoid thick plastic sections prone to sinks and voids.

The housing 52 also includes a number of features configured to allow the housing 52 to cooperate with similarly configured housings as the bricks 50 are formed into an array. For example, a projection 88 and a recess 90 are configured to cooperate with complementary features on the housing of a brick stacked on top of the brick 50. Similarly, each side of the brick 50 includes a projection 92 and a recess 94 configured to cooperate with bricks that are placed adjacent to the brick 50. Briefly returning to Figure 2, it is shown that the housings 14 include similar features. For example, each of the housings 14 shown in Figure 2 has a plurality of projections 96 and a plurality of recesses 98 on a top portion of the exterior 34. Similarly, the sides of each of the housings 14 includes projections 100 and recesses 102 configured to mate with complementary features on the housings 14 of adjacent bricks 15. As discussed in more detail below, these interlocking features can be helpful when arranging a number of individual bricks to form an array.

Depending on the application, it may be desirable to mount individual bricks, or an array of bricks, to the floor or wall of a structure, such as a battery compartment. Figure 6 shows one such arrangement for a battery brick 104. The battery brick 104 includes mounting features 106, 108, 110, 112, which can be molded directly into a housing 114. As shown in Figure 6, a floor 116 of a battery compartment is configured with a rear toe clip 118 which may be, for example, welded directly to the floor 116. The mounting feature 106 is easily slid into the rear toe clip 118 to position the battery brick 104 in its desired location. A front toe clip 120, which is removable from the floor 116, is then used to secure a front one of the mounting features 112 with a fastener arrangement 122.

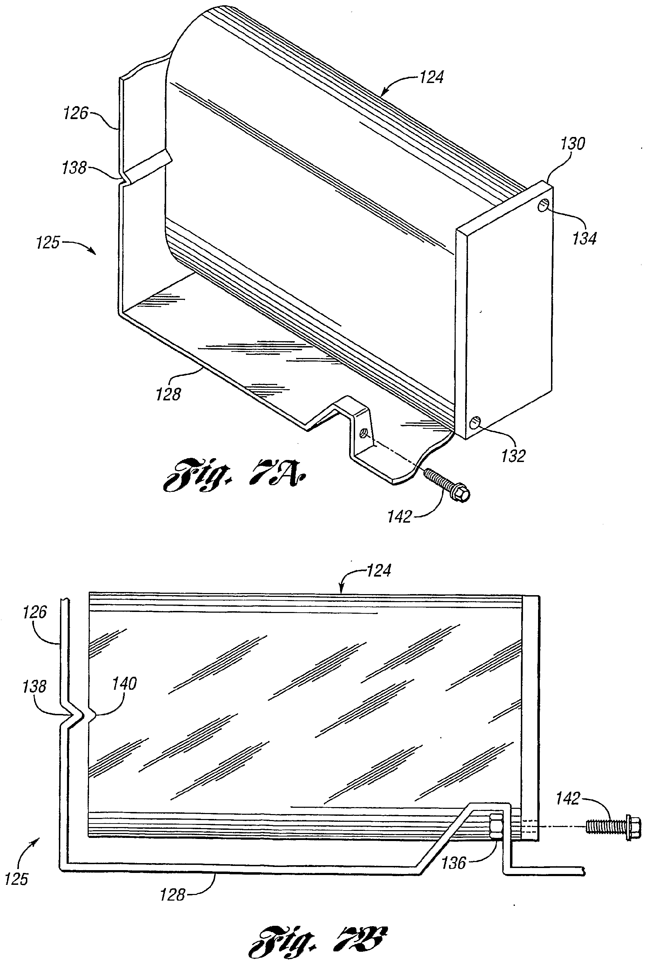

Figures 7A and 7B illustrate another way in which a battery brick 124 can be mounted to a structure such as a battery compartment 125. The battery compartment 125 includes a wall 126 and a floor 128. The battery brick 124 is configured somewhat differently than the battery brick 104 shown in Figure 6. For example, the battery brick 124 includes a flange 130 having a pair of mounting holes 132, 134 disposed therethrough. In the embodiment shown in Figures 7A and 7B, the floor 128 of the battery compartment 125 is made from sheet metal, and is configured to hold a weld nut 136 -- see Figure 7B. The wall 126 of the battery compartment 125 includes a V-notch 138 configured to mate with a corresponding V-notch 140 formed in a rear portion of the battery brick 124.

As shown in Figures 7A and 7B, a single fastener 142 can be used to securely mount the battery brick 124 to the battery compartment 125. As the fastener 142 is threaded into the weld nut 136, it draws the battery brick 124 rearward such that the V-notch 138 in the wall 126 mates with the V-notch 140 in the battery brick 124, thereby properly locating the battery brick 124. As discussed in more detail below, proper location of battery bricks may be important, particularly when it is desired to electrically connect a number of battery bricks to form a high voltage array.

Figure 8 shows a battery brick 144 which can form at least a part of a power supply system. The battery brick 144 includes a housing 146. having an exterior 148. As shown in Figure 8, a portion of the exterior 148 is curved, generally matching the cylindrical shape of the battery cless 150 disposed therein. When compared to a housing that is generally rectangular on its exterior, the configuration of the housing 148 may help to reduce the amount of material required to produce it. The curved exterior 148 does, however, make it more difficult to stack a number of the battery bricks 144 on top of each other to form an array. To overcome this issue, the exterior 148 of the housing 146 includes a number of small channels 152, 154, 156, 158. The channels 152, 158 are located on a top portion of the housing 148, and the channels 154, 156 are located on a bottom portion of the housing 148. Each of the channels 152-158 is configured to receive a tie-rod which can be used to help adjoin a number of the bricks 144 adjacent to each other. Moreover, in some embodiments, the tie-rods can be shared between two rows of bricks, depending on the depth of the channels 152-158.

Figure 9 shows an array of the battery bricks 144 located adjacent to each other. Each of the bricks 144 includes a pair of channels 152, 158 having a respective tie-rod 162, 164 disposed therein. Fastened to one of the tie-rods 162, 164 is an end plate 166 which cooperates with another end plate (not shown) to capture the battery bricks 144 therebetween. It is understood that there are two additional tie-rods disposed on a lower portion of the array 160, not visible in Figure 9.

As shown in Figure 9, the channels 152, 158 are relatively shallow compared to the tie-rods 162, 164. In such a case, it may be possible to have a single tie-rod between battery bricks which are stacked one on top of the other. For example, returning to Figure 8, if a single tie-rod was used in the channels 158 along the top side of a series of the bricks 144, and a single tie-rod was used in the channels 154 of the bricks 144, end plates, such as the end plate 166 shown in Figure 9 could effectively capture the bricks 144 between them. This would leave the channels 152 and 156 unused, such that they could mate with tie-rods that were holding another set of the battery- bricks 144 together in a second array.

Alternatively, channels, such as the channels 152-158 can be relatively tall, such that each row of battery bricks uses tie-rods in each of its respective channels, and the channels keep the layered rows of battery bricks offset from each other far enough to ensure that the tie-rods do not interfere with each other. Figure 10 shows one such arrangement, in which a channel 168 is taller than a corresponding tie-rod 170, shown in Figure 10 in phantom. In addition to being taller than the tie-rod 170, the channel 168 also includes locating features 172 adjacent the tie-rod 170. The locating features 172 mate with complementary locating features on another channel, when two battery bricks, or rows of battery bricks, are stacked one on top of the other. This helps to make assembly of large numbers of bricks a relatively fast and efficient process.

Returning briefly to Figure 8, the battery brick 144 is shown to include an interlocking feature 174 that includes a projection 176 and a recess 178. The projection 176 and recess 178 are configured to cooperate with complementary projections and recesses on adjacent battery bricks, so that when an array, such as the array 160 shown in Figure 9, is formed, the battery bricks 144 are properly aligned with each other. As discussed in conjunction with Figure 2, the projections 100 and recesses 102 serve a similar function.

One difference between the interlocking features 176, 178 shown on the bricks 144 in Figure 9, and the interlocking features 100, 102 on bricks 15 shown in Figure 2, is that the interlocking features 100, 102 allow some front-to-back movement of the bricks 15 after they are placed adjacent to each other. This may be helpful to help correct any alignment deficiencies prior to the bricks 15 being locked together, for example, with tie- rods and end plates. In addition, the configuration of the interlocking features 100, 102 also facilitates the removal of a single brick 15 from an array of the bricks. For example, if an array of bricks 15 is held together with tie-rods and end plates--such as the tie-rods 162, 164 and end plates 166 shown in Figure 9--a single one of the bricks 15 can be removed from the array by loosening the tie-rods and sliding the brick out, away from the array.

A battery brick housing, such as the housing 14 shown in Figure 1, or the housing 146 shown in Figure 8, can be formed by any method or methods effective to create the desired structure. For example, the housing 14 shown in Figure 1, or slight variations thereof, may be extruded in long sections, and later cut to length. Apertures, such as the apertures 36, could be formed in a secondary operation. Alternatively, a housing, such as the housing 14 could be injection molded, thereby eliminating some or all of the secondary processes required after an extrusion process.

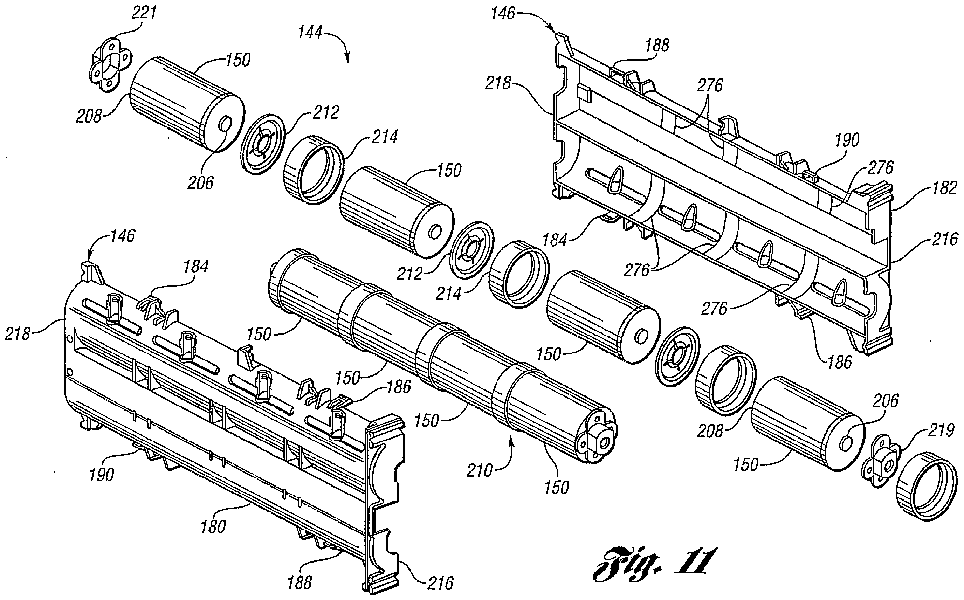

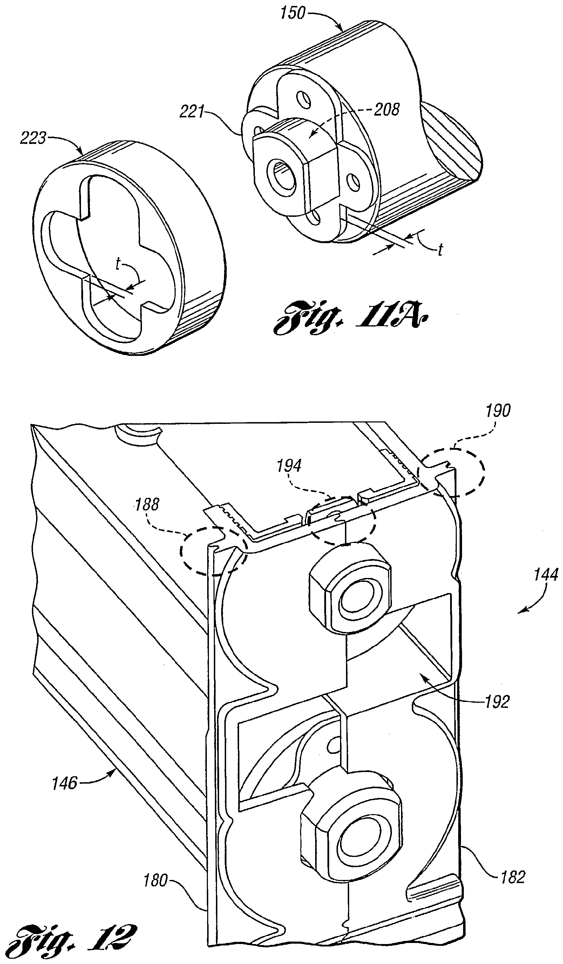

Figure 11 shows an exploded view of the battery brick 144, and illustrates that the housing 146 is made from two pieces 180, 182, which are configured to snap together. A close examination of the two pieces 180, 182 reveals that they are the same component, with one oriented upside down from the other. For example, the first piece 180 includes male tabs 184, 186 configured to mate with tab retainers 188, 190 on the second piece 182. At the bottom of the second piece 182, however, are the same male tabs 184, 186 configured to mate with tab retainers 188, 190 on the bottom of the first portion 180. Thus, a single mold may be used to create the two-piece housing 146 for the battery brick 144. Of course, a two- piece housing, such as the housing 46, can also be made from two different pieces, for example, formed in two different molds.

Figure 12 shows some details of the two pieces 180, 182 of the housing 146. For example, edges 188, 190 of the two pieces 180, 182, are formed with small V- notches to mate with complementary V-notches on adjacent battery bricks. Using these V-notches creates a high resistance airflow path, such that air blown toward the face of the brick 144, will enter an interior portion 192, rather than flowing between adjacent bricks 144. This helps to keep the cooling airflow moving across the battery cells 150, rather than on the outside of the housing 146 where it is less effective. In addition, a mating V-notch 194 is also formed where the two pieces 180, 182 meet. Again, this helps to force airflow through the interior 192 of the housing 146.

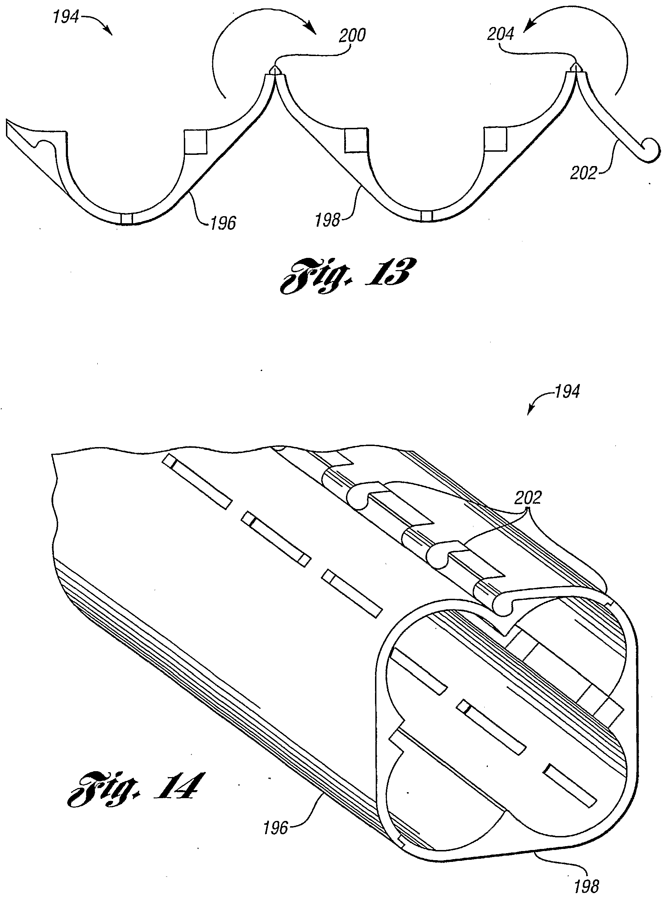

Although Figures 11 and 12 illustrate one convenient method for forming a housing, such as the housing 146, the housing of a battery brick can also be formed as a single piece that includes one or more living hinges. Figure 13 shows one such arrangement, for a battery brick housing 194. The housing 194 includes first and second main portions 196, 198, which are held together by a living hinge 200. A locking arm 202 is attached to the second portion 198 through a second living hinge 204. Figure 14 shows the housing 194 snapped together, and further illustrates that a plurality of the locking arms 202 are disposed along a length of the housing 194.

Returning to Figure 11, it is shown that each of the battery cells 150 includes two terminals 206, 208 disposed at opposite ends of the respective battery cell 150. The terminals 206 are positive electric terminals, and the terminals 208 are negative electric terminals. Each of the positive electric terminals 206 is fitted with an insulator 210 which, in the embodiment shown in Figure 11, is a two-piece structure, including a cap 212 and a ring 214. The insulators 210 cover a portion of the positive terminal 206 of one battery cell 150, and a portion of the negative terminal 208 of an adjacent battery cell 150. In addition to providing electrical insulation, the insulators 210 also act as spacers to control the air gaps and alignment of the battery cells 150.

The housing 146 includes first and second ends 216, 218. As noted above, a battery brick can contain any number of battery cells effective for the intended use. In the battery brick 144 shown in Figure 11, eight of the battery cells 150 are used in two adjacent rows, with each row of four battery cells 150 forming a battery module. For each of the battery modules, the first and last battery cell 150 will have one of its terminals adjacent a respective end 216, 218 of the housing 146. Terminal caps 219, 221 are used to extend the terminals 206, 208 of the battery cells 150 outside of the housing 146 so that adjacent bricks 144 can be electrically connected to each other.

Although the negative terminals 208 of the battery cells 150 that are adjacent the ends 216, 218 of the housing 146 do not have insulators 210 on them, it may be convenient to provide a negative terminal insulator at the end of a module. This can help equalize airflow around battery cells, such as the battery cells 150. It can also help distribute a force, for example, a force applied externally to the battery brick, more evenly across the battery cells when a number of battery bricks are stacked on top of each other. For example, Figure 11A shows one of the terminal caps 221 over a negative terminal 208 of a battery cell 150. A negative terminal insulator 223 is configured to fit over the terminal cap 221. As shown in Figure 11A, the insulator 223 has a thickness (t) which is generally the same as the thickness (t) of the terminal cap 221. This allows the insulator 223 to be placed over the terminal cap 221 without adding length to the module.

Although some of the battery cells may have a very low nominal voltage --e.g., 1.2 volts-- it is possible to have higher voltage battery cells. Moreover, even if an individual battery cell has a relatively low voltage, electrically connecting a large number of the low voltage battery cells together can create a power supply system having a high nominal voltage. In such a case, it may be desirable to limit access to some of the terminals of the battery cells 150, such that, for example, service personnel are exposed to only a fraction of the nominal voltage of the power supply system.

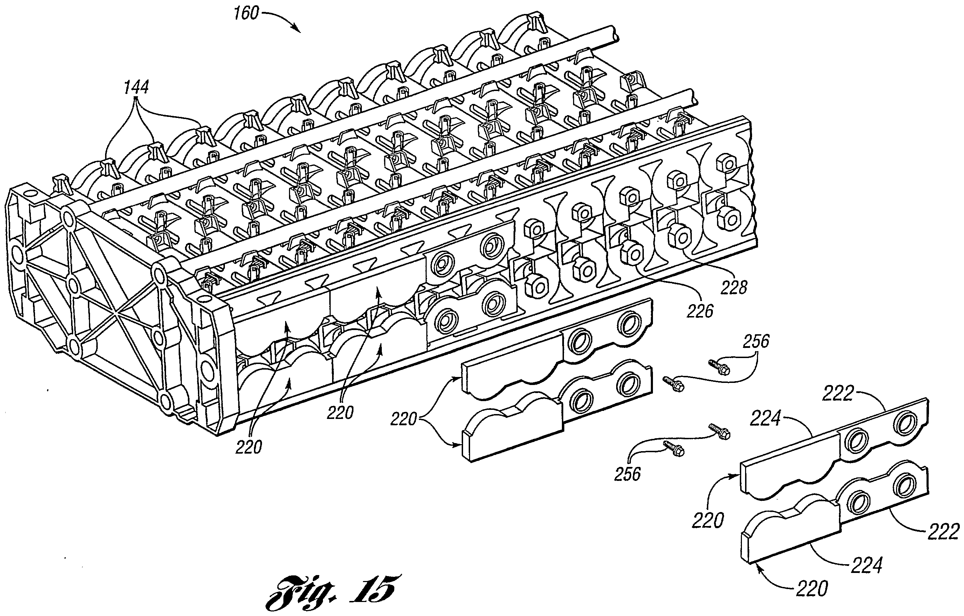

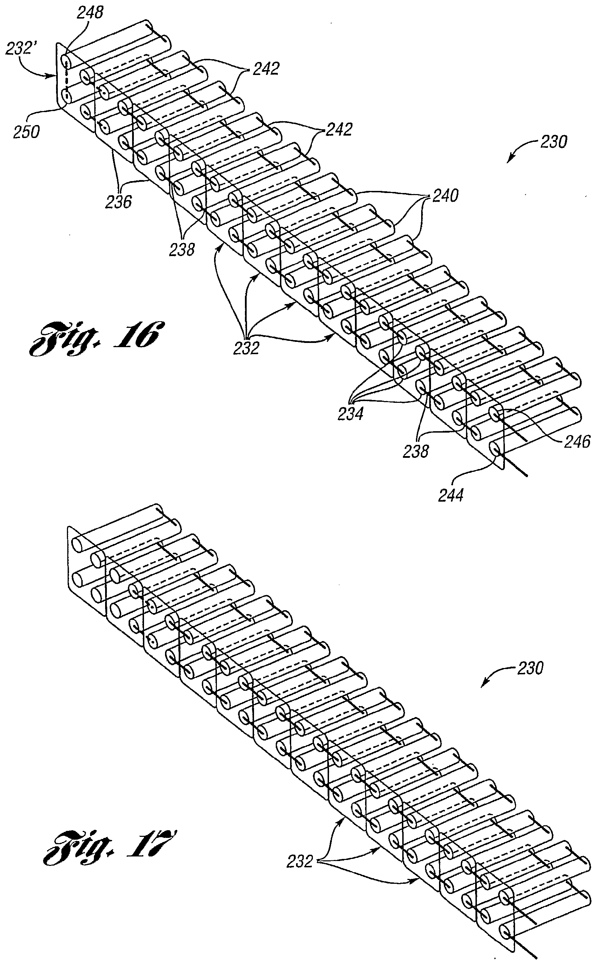

Figure 15 shows the array 160 with the battery bricks 144 in the process of being electrically connected to each other. Shown in Figure 15 is a plurality of terminal connectors 220. Each of the terminal connectors 220 includes a first portion 222 and a second portion 224. The first portion 222 includes a bus bar (not visible in Figure 15) that allows an electrical connection to be made between two adjacent terminals, for example, terminals 226, 228. The second portion 224 of each of the terminal connectors 220 effectively inhibits access to adjacent terminals, such that, for example, the terminals 226, 228 must be disconnected from each other before the terminal connector 220 can be removed to allow access the terminals adjacent the terminals 226, 228. This is explained more fully below in conjunction with Figures 16 and 17.

Figure 16 shows an array 230 consisting of one row of battery bricks 232. In the example shown in Figure 16, each of the bricks 232 includes four modules 234 consisting of four battery cells each (not separably visible). In Figure 16, each of the battery cells are connected in series, and each of the battery modules 234 are also connected in series to other battery modules 234. Therefore, the nominal voltage of the array 230 is much higher than the nominal voltage of each individual battery cell.

The battery cell terminals in a front portion 236 of the bricks 232 are electrically connected to each other with bus bars 238. Similarly, battery terminals in a rear portion 240 of the bricks 232 are electrically connected to each other with bus bars 242. With the electrical connections shown in Figure 16, the entire nominal voltage of the array 230 will be seen across battery terminals 244, 246. The terminal connectors 220 shown in Figure 15 can help limit exposure to the high voltage of a battery array, such as the array 230. For example, the terminal connectors 220 can be attached to the front terminals of the bricks 232 such that the terminal connectors 220 must be removed sequentially starting at the terminals on the far left brick (as shown in Figure 16) labeled 232'.

As shown in Figure 15, the terminal connectors 220 work with four adjacent battery terminals. Because it is desirable to have the last set of terminals 244, 246 accessible to make an electrical connection, the first set of terminals 248, 250 on the first brick 232' have a separate electrical terminal connector, For the remainder of the front battery terminals of the bricks 232, the terminal connectors 220 can be used. Although the terminal connectors 220 are configured to work with four adjacent terminals, terminal connectors can be made to different lengths to work with other numbers of adjacent battery terminals. For example, break lines can be formed in the second portions 224 of the terminal connectors 220 to facilitate easy sizing for particular applications.

As shown in Figure 15, each of the terminal connectors 220 overlaps an adjacent terminal connector 220 such that a first one of the terminal connectors 220 must be removed prior to access and removal of an adjacent terminal connector 220. In Figure 16, removal of the first set of terminal connectors 220 from the first brick 232' exposes only a fraction of the nominal voltage of the entire array 230. For example, removal of the first set of terminal connectors 220 exposes the terminal connections shown by a dashed line in Figure 16. If each of the battery cells used in the array 230 are connected in series, and each of these cells has a nominal voltage of approximately 1.2 volts, the maximum voltage across any of the exposed terminals --indicated by the dashed lines-- is approximately 20 volts. This is far less than the total voltage of the array 230. The accessible voltage is further reduced as more of the terminal connectors 220 are removed from adjacent bricks 232. For example, in Figure 17, the exposed terminal connectors, again indicated by dashed lines, have across them only 10 volts, again a small fraction of the total nominal voltage of the array 230. This same voltage is seen across the exposed terminals as each successive terminal connector 220 is removed.

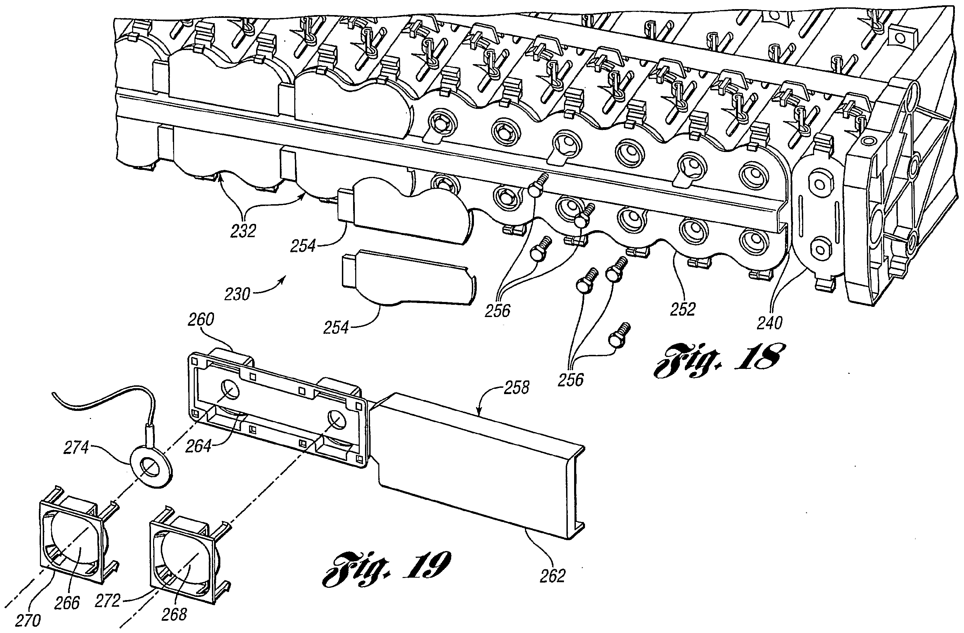

Once the last of the terminal connectors 220 is removed from the terminals on the front side 236 of the bricks 232, each of the terminals on the rear side 240 of the bricks 232 can be made accessible simultaneously: without the connection on the front side of the bricks 232, there is no voltage across the terminals on the back side 240. Thus, the terminal connectors 220 do not need to be used on the back side 240 of the bricks 232, which saves time when assembling and disassembling the array 230. Figure 18 shows the back side 240 of the bricks 232 in the array 230. A single terminal connector 252 contains all of the bus bars 242--see Figure 16 and snap-on covers 254 can be placed over the terminal connector 252 after it is screwed in place with fasteners 256. Although shown separately from the terminal connector 252 in Figure 18, snap-on covers, such as the covers 254, can be molded onto the terminal connector 252, for example, with a living hinge.

As discussed above, the terminal connectors 220 used on the front portion 236 of the battery bricks 232 require that adjacent pairs of terminals be disconnected from each other, and from the array 160, prior to the removal of adjacent terminal connectors 220. In addition, a terminal connector used on the rear portion 240 of the battery bricks 232, such as the terminal connector 252 shown in Figure 18, can be configured such that it cannot be removed until the last of the terminal connectors 220 is disconnected and removed from the front portion 236 of the battery bricks 232. In this way, even if all of the terminals on the rear portion 240 of the battery bricks 232 have welded-on terminal connectors, service personnel are not exposed to high voltage, since the front terminals must be disconnected before the rear terminals can be accessed.

As shown in Figure 18, the terminal connector 252 is attached to battery terminals using threaded fasteners 256. Of course, other fastening mechanisms can be used to attach the terminal connector 252 to the battery terminal. For example, on the rear portion 240 of the array 230, a terminal connector or connectors can be welded or press fit to the battery terminals to eliminate the need for separate fasteners.

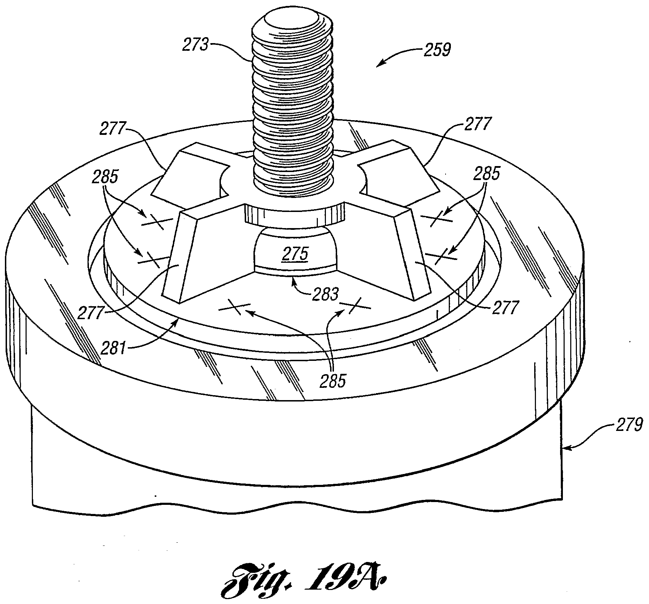

Figure 19 shows another type of terminal connector, similar to the terminal connectors 220 shown in Figure 15. In the array 160, shown in Figure 15, each of the battery terminals includes a female threaded portion configured to receive a male threaded fastener, such as the fasteners 256. Alternatively, battery cells may have, for example, a male threaded portion configured to receive a female threaded fastener, such as a nut. Figure 19 shows a terminal connector 258 configured to accommodate battery cells having male threaded terminals, such as the male threaded terminal 259, shown in Figure 19A.

The terminal connector 258, like the terminal connectors 220 shown in Figure 15, includes first and second portions 260, 262. The first portion 260 is configured to retain a bus bar 264 that facilitates an electrical connection between two adjacent battery cells. Shown schematically in Figure 19 are washer and nut combinations 266, 268, which are held in place by nut retainers 270, 272. Like the terminal connectors 220, the terminal connector 260 has a second portion 258 which inhibits access to an adjacent pair of battery terminals. The adjacent pair of terminals is covered until the nut/washers 266, 268 are removed, and the entire terminal connector 258 is removed. Therefore, the two terminals are electrically disconnected before the adjacent two terminals under the second portion 262 are exposed.

Figure 19A shows one configuration for a male threaded terminal 259 that can be used with terminal connectors, such as the terminal connector 258. The male threaded terminal 259 includes a threaded post 273, configured to receive a nut and/or washer, such as any one of the nut and washer combinations 266, 268 shown in Figure 19. The male threaded terminal 259 is raised above a battery cell vent cap 275 by four stanchions 277, which facilitate ventilation of battery cell 279. The terminal 259 includes a base 281 having an aperture 283 below the stanchions 277. The base 281 is projection welded to the vent cap 275 at points 282, although other types of attachments can be used.

Returning to Figure 19, a portion of a voltage sensor 274 is shown. The voltage sensor 274 can be placed between the bus bar and one of the nut/washers 266, 268. The voltage sensor 274 can be connected to a small circuit adjacent the battery cell, which can then send a signal to a system controller, such as a vehicle system controller (VSC) in a vehicle. Similar voltage sensors 274 can be connected at each of the terminal connectors 260, such that multiple signals are sent to a VSC to indicate the voltage of the battery modules in a large battery array. This information is useful in determining, for example, when battery maintenance is needed.

In order to facilitate a good connection between adjacent battery terminals, for example, using a terminal connector such as the terminal connector 220 shown in Figure 15, or the terminal connector 258 shown in Figure 19, the battery terminals should be relatively aligned with one another. For example, if the terminal 226 shown in Figure 15 extends outward from its respective brick 144 significantly farther than the terminal 228 extends outward from its respective brick 144, attaching the terminal connector 220 could be problematic. In particular, the misalignment of terminals 226, 228 could lead to a poor electrical connection. In order to address this problem, one or more locating devices may be used to locate the battery cells within a respective housing.

Returning to Figure 11, it is shown that the brick 144 includes two rows of four battery cells 150 each. When the battery cells 150 are manufactured, each will have a nominal length subject to a manufacturing tolerance. As a number of the battery cells 150 are placed end-to-end relative to each other, the overall length of the resulting battery module will have a variation that is the sum of the manufacturing tolerances of each of the battery cells 150 and the tolerances of the terminal ends 219, 221, and any interconnectors used to connect the battery cells 150. This phenomenon, known as tolerance stack up, can result in an undesirable amount of variation in the location of the battery terminals that are adjacent to the ends 216, 218 of the housing 146. In order to reduce the variation and the location of the battery terminals, the housing 146 includes locating devices 276 to locate individual battery cells 150 within the housing 146.

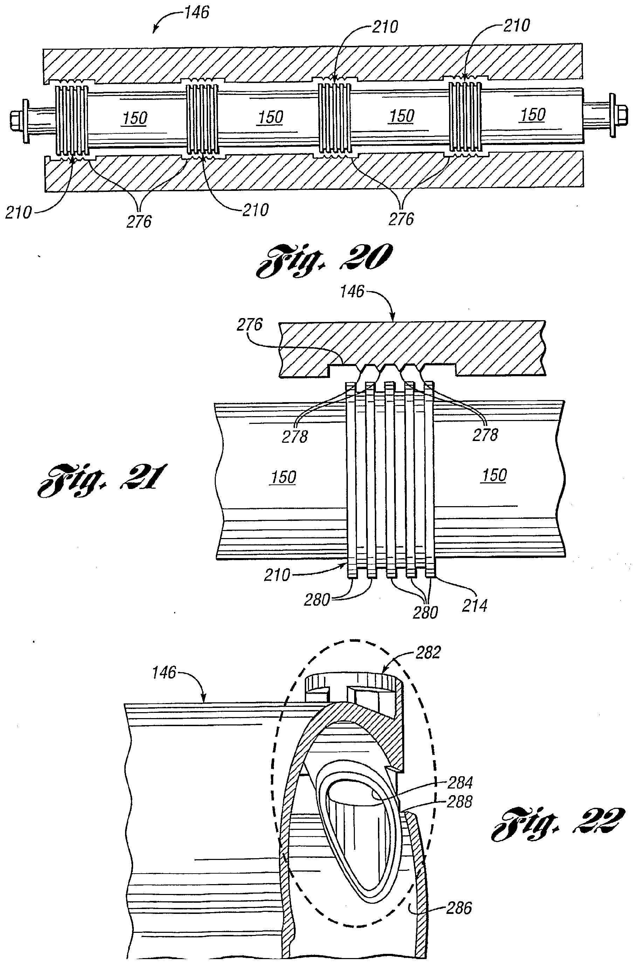

As shown in Figure 20, the locating devices 276 include grooves formed into the housing 146, which are configured to capture the insulators 210 to locate the battery cells 150. In order to more firmly capture the insulator 210 within the groove 276, each of the grooves 276 may contain a plurality of teeth 278, as shown in Figure 21. As shown in detail in Figure 21, the ring 214 of the insulator 210 includes a plurality of smaller rings 280 which cooperate with the teeth 278 to firmly locate the battery cells 150 within the housing 146. Using locating devices, such as the grooves 276 in the housing 146 helps to ensure that the battery terminals adjacent the ends of the battery brick housing, such as the housing 146, will each be within a predetermined distance of the end of the housing. This helps to ensure proper alignment of the battery terminals as terminal connectors, such as the connectors 220, are attached.

As discussed above, embodiments of the invention may provide a power supply system including a number of mechanisms for ensuring airflow around battery cells to facilitate cooling. Because uniformity of the airflow may be important to the cooling process, and measurement of the temperature of the battery cells provides relevant information regarding the effectiveness of the cooling, embodiments of the invention include a number of "sensor stations" where temperature sensors can be used without adversely affecting the uniformity of the cooling airflow. For example, Figure 8 shows a number of sensor stations 282 disposed along a length of the battery brick 144. Specifically, the sensor stations 282 are disposed on the exterior 148 of the housing 146.

Each of the sensor stations 282 is configured to interrupt the airflow around the battery cells 150 in substantially the same manner whether or not a temperature sensor is positioned within a respective sensor station 282. Each of the sensor stations 282 includes an aperture 284 that allows a temperature sensor to enter the housing 146 and contact a surface of the battery cell 150. The sensor stations 282 can be molded directly into the housing 146, for example, in an injection molding process.

Figure 22 shows a detail of a sensor station 282 in the housing 146. Positioned on an interior portion 286 of the housing 146, the sensor station 282 includes a seal 288 configured to contact the outside surface of the battery cell 150. Thus, as air flows around the outside of the battery cell 150, its flow path is interrupted by the seal 288 mating with the battery cell 150. The airflow goes around the seal 288 and continues through the interior 286 of the housing 146. Because the seal 288 contacts the battery cell 150, the airflow is interrupted whether or not a temperature sensor is positioned within the sensor station 282.

This configuration allows flexibility with regard to the positioning of temperature sensors within a battery brick, such as the brick 144, in that cooling airflow is unaffected by the number of temperature sensors actually installed in a particular battery system. Moreover, the aperture 284 in each of the sensor stations 282, allows the temperature sensor to be placed in the interior 286 of the housing 146, and in fact, allows the temperature sensor to contact the outside surface of the battery cell 150. This facilitates an accurate measurement of the battery cell temperature. This is in contrast to other battery temperature mechanisms, which, for example, may measure the temperature of a battery housing, and then use some formula to infer the temperature of the battery cell.

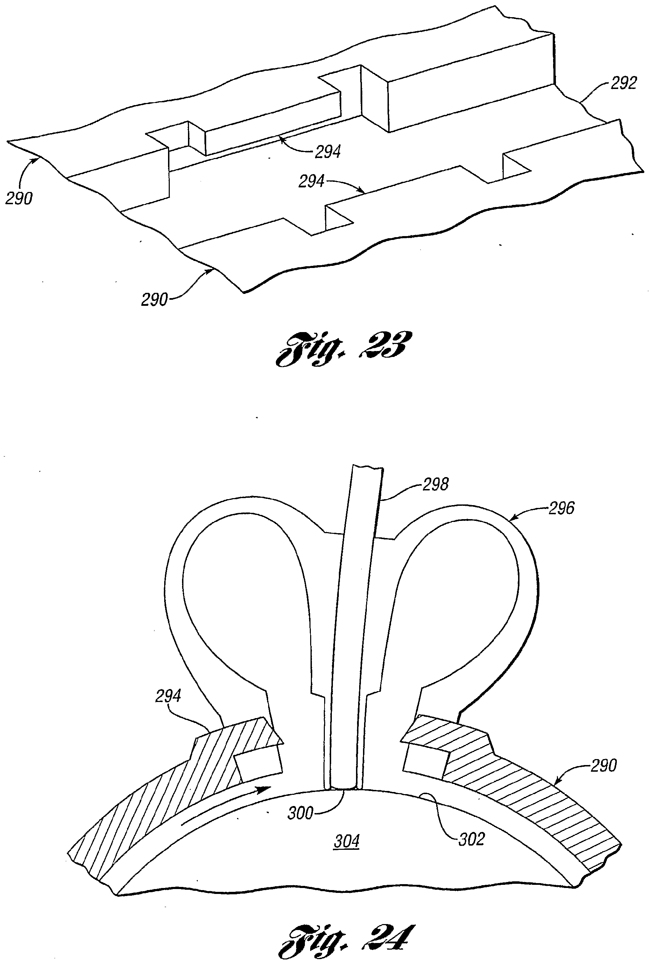

As discussed above, some of the housings used in power supply systems can be manufactured in an extrusion process. Use of a high profile sensor station, such as the sensor stations 282 is not conducive to such a process. Figure 23 shows an alternative to the high profile sensor stations 282, shown in Figure 8. Figure 23 shows a portion of a battery brick housing 290 that includes an aperture 292 in the form of a slot, similar to the apertures 36 shown in Figure 1. As noted above, apertures such as these can be added in a secondary operation after a housing, such as the housing 290, or the housing 14 shown in Figure 1, is extruded.

Returning to Figure 23, the aperture 292 is configured with a first portion 294 of a sensor station configured to receive a temperature sensor. As shown in Figure 24, a second portion 296 of the sensor station snap-fits into the first portion 294 and is configured to hold a temperature sensor 298. Also illustrated in Figure 24 is the configuration of the second portion 296 of the sensor station, which allows an end 300 of the temperature sensor 298 to contact a surface 302 of a battery cell 304. This provides direct measurement of the temperature of the battery cell 304.

Like the temperature stations 282, shown in Figure 8, the second portion 296 of the temperature station contacts the surface 302 of the battery 304 such that air flowing around the battery cell 304 is interrupted regardless of whether the temperature sensor 298 is installed. Again, this provides for uniform airflow regardless of which of the temperature stations have temperature sensors positioned in them. This also effectively isolates the temperature sensor 298 from the airflow, thereby providing a more accurate measurement of the temperature of the battery cell 304. This provides an advantage over conventional temperature measurement techniques for battery configurations, which either rely on an inferred temperature, or expose a temperature sensor to the cooling airflow, which not only decreases the accuracy of the temperature measurement, but also reduces the uniformity of the cooling air flow.

## Claims

1. A power supply system (10) in the form of a battery brick (15), comprising:
a plurality of power supply units, each consisting of one battery cell (150); and
a housing (14) configured to receive the power supply units therein, the housing being configured to provide an air flow path around each of the power supply units in the housing;
**characterised in that**
the housing includes a plurality of sensor stations (282; 296), each of which interrupts at least a portion of the airflow around the power supply units and is open at one end outside the housing (14) to receive a respective temperature sensor (298) therein,
each sensor station (282) is open at an opposite end within the housing to permit a temperature sensor (298) within the sensor station (282; 296) to make contact with a power supply unit in order to determine the temperature of the respective power supply unit, and
the opposite end of the sensor station includes a seal (288) configured to contact the outside surface of the power supply unit;
each sensor station (282; 296) being thereby configured to interrupt the airflow in substantially the same manner whether or not a temperature sensor is received in the sensor station.

2. A power supply system as claimed in claim 1,
wherein the housing is configured to receive a predetermined number of power supply units, and includes one sensor station for each of the predetermined number of power supply units.

3. A power supply system as claimed in claim 1 or 2,
wherein each sensor station (296) is a separately formed part that is received within an aperture (292) in the housing.

## Patentansprüche

1. Stromversorgungssystem (10) in Form eines Batterieblocks (15), umfassend:
eine Vielzahl von Stromversorgungseinheiten, wobei jede aus einer Batteriezelle (150) besteht; und
ein Gehäuse (14), das konfiguriert ist, um die Stromversorgungseinheiten darin aufzunehmen, wobei das Gehäuse konfiguriert ist, um einen Luftströmungsweg um jede der Stromversorgungseinheiten in dem Gehäuse bereitzustellen;
**dadurch gekennzeichnet, dass**
das Gehäuse eine Vielzahl von Sensorstationen (282; 296) einschließt, wobei jede davon mindestens einen Teil des Luftstroms um die Stromversorgungseinheiten unterbricht und an einem Ende außerhalb des Gehäuses (14) offen ist, um einen entsprechenden Temperatursensor (298) darin aufzunehmen,
jede Sensorstation (282) an einem gegenüberliegenden Ende in dem Gehäuse offen ist, um es einem Temperatursensor (298) in der Sensorstation (282; 296) zu ermöglichen, einen Kontakt mit einer Stromversorgungseinheit herzustellen, um die Temperatur der entsprechenden Stromversorgungseinheit zu bestimmen; und
das gegenüberliegende Ende der Sensorstation eine Dichtung (288) einschließt, die konfiguriert ist, um die Außenfläche der Stromversorgungseinheit zu berühren;
jede Sensorstation (282; 296) dadurch konfiguriert ist, um den Luftstrom im Wesentlichen auf die gleiche Art und Weise zu unterbrechen, unabhängig davon ob ein Temperatursensor in der Sensorstation aufgenommen wird oder nicht.

2. Stromversorgungssystem nach Anspruch 1, wobei das Gehäuse konfiguriert ist, um eine vorher festgelegte Anzahl von Stromversorgungseinheiten aufzunehmen und eine Sensorstation für jede der vorher festgelegten Anzahl von Stromversorgungseinheiten einschließt.

3. Stromversorgungssystem nach Anspruch 1 oder 2, wobei jede Sensorstation (296) ein separat geformtes Teil ist, das in einer Öffnung (292) in dem Gehäuse aufgenommen wird.

## Revendications

1. Système d'alimentation en puissance (10) sous la forme d'une brique (15) de batteries, comprenant :
plusieurs unités d'alimentation en puissance, chacune étant constituée d'un élément (150) de batterie ; et
un boîtier (14) conçu pour recevoir les unités d'alimentation en puissance à l'intérieur de ce dernier, le boîtier étant conçu pour établir un trajet de circulation d'air autour de chacune des unités d'alimentation en puissance se trouvant dans le boîtier ;
**caractérisé en ce que**
le boîtier comprend plusieurs parties d'accueil (282 ; 296) de capteur, chacune d'entre elles interrompant au moins une partie de la circulation d'air entourant les unités d'alimentation en puissance et étant ouverte au niveau d'une extrémité à l'extérieur du boîtier (14) de façon à recevoir, à l'intérieur de cette dernière, un capteur de température respectif (298),
chaque partie d'accueil (282) de capteur est ouverte au niveau d'une extrémité opposée à l'intérieur du boîtier de façon à permettre à un capteur de température (298) se trouvant à l'intérieur de la partie d'accueil (282 ; 296) de capteur d'établir un contact avec une unité d'alimentation en puissance afin de déterminer la température de l'unité d'alimentation en puissance respective, et
l'extrémité opposée de la partie d'accueil de capteur comprend un joint d'étanchéité (288) conçu pour contacter la surface extérieure de l'unité d'alimentation en puissance ;
chaque partie d'accueil (282 ; 296) de capteur étant ainsi conçue pour interrompre la circulation d'air sensiblement de la même manière qu'un capteur de température soit ou non reçu dans la partie d'accueil de capteur.

2. Système d'alimentation en puissance selon la revendication 1, dans lequel le boîtier est conçu pour recevoir un nombre prédéterminé d'unités d'alimentation en puissance, et comprend une partie d'accueil de capteur pour chaque unité du nombre prédéterminé d'unités d'alimentation en puissance.

3. Système d'alimentation en puissance selon la revendication 1 ou 2, dans lequel chaque partie d'accueil (296) de capteur est une partie formée séparément qui est reçue à l'intérieur d'une ouverture (292) ménagée dans le boîtier.
